# EUROPEAN PATENT APPLICATION

(11) **EP 1 820 695 A2**
(43) Date of publication of application: **22.08.2007**
(21) Application number: 06425830.4
(22) Date of filing: 12.12.2006
(51) Int. Cl.: B60Q 3/04

(54) **Control system for automotive display devices**

(30) Priority: 15.02.2006 EP 06425088
(71) Applicant: MAGNETI MARELLI SISTEMI ELETTRONICI S.p.A., 20011 Corbetta (Milano) (IT)
(72) Inventor: Mortara, Piero, Magneti Marelli Sistemi Elet. SPA, 10078 Venaria Reale (IT); De La Pierre, Piero Magneti Marelli Sis. Elet. SPA, 10078 Venaria Reale (IT)
(74) Representative: Jorio, Paolo

(57) **Abstract**

There is described a control system (1) for controlling at least one information display device (2) of a vehicle, the display device (2) being adjustable as regards at least one lighting colour, and the control system having a user interface (3) by which a user interacts with the display device (2); receiving means (4) for receiving information from off-vehicle sources; and electronic control means (6) connected to the display device (2), to the user interface (3), and to the receiving means (4);
characterized in that the electronic control means (6) are configured to control the lighting colour of the display device (2) on the basis of the information from the off-vehicle sources.

## Description

The present invention relates to a control system for automotive information display devices, and in particular to a system for controlling the lighting colours of automotive information display devices on the basis of information from off-vehicle information sources.

As is known, modern motor vehicles are equipped with information display devices, which normally comprise an analog or digital instrument panel displaying quantities such as vehicle speed, engine speed, fuel level, etc.; a number of vehicle-state optical indicators showing, for example, lights on, engine oil level, cooling water temperature, etc.; and display devices relative to other on-vehicle devices, such as a car radio, air-conditioner, navigator, etc.

The lighting colours of automotive information display devices are normally defined by the vehicle manufacturer at the vehicle design stage, and most devices are not configured to change the lighting colour or the colour of the information displayed.

Recently, however, information display devices have been proposed, in which the lighting colours are controlled, modified, and/or adjusted automatically by a control system in response to certain events, so as to alert the occupants of the vehicle to the event, e.g. a hazard situation, or to improve visibility of the information displayed by the devices.

DE 4011840, for example, relates to an automotive information display device featuring an optical indicator, which changes colour from green to orange to red, as a function of threshold values of vehicle speed, engine speed, and the distance of the vehicle from the vehicle in front.

Known information display devices configured to change the lighting colour, however, are normally only able to do so on the basis of a limited number of quantities. To ensure greater safety of the occupants of the vehicle, therefore, a need is felt for display devices designed to change lighting colour on the basis of a greater number of quantities.

It is an object of the present invention to provide a system for controlling automotive information display devices, and designed to eliminate at least some of the drawbacks of known display devices.

According to the present invention, there is provided a system for controlling automotive information display devices, as claimed in Claim 1.

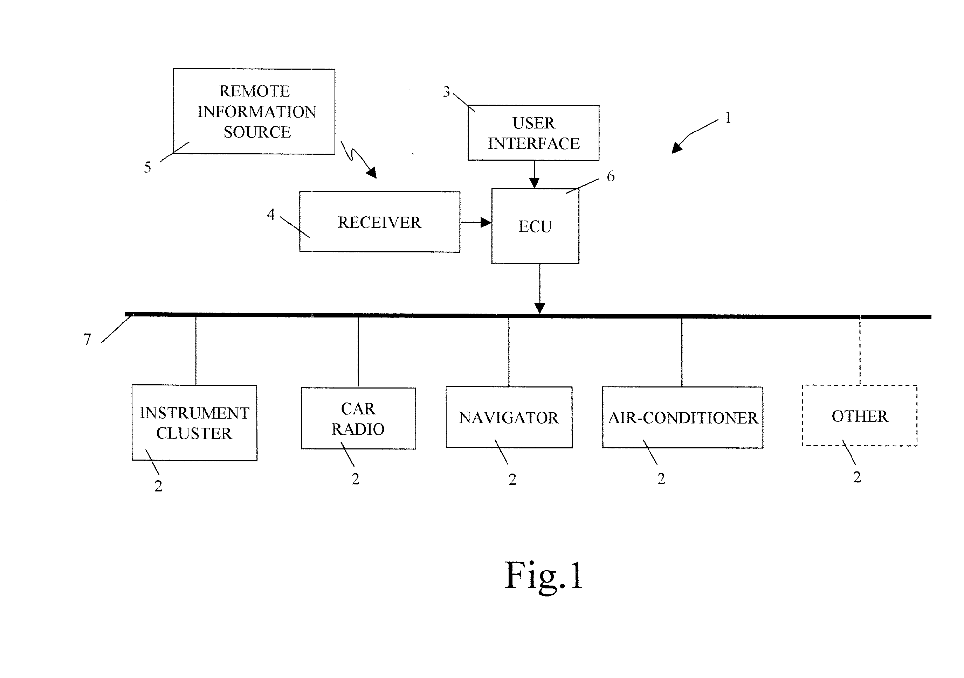

A preferred, non-limiting embodiment of the present invention will be described by way of example with reference to the attached drawing, which shows a system for controlling automotive information display devices in accordance with the invention.

Number 1 in the attached drawing indicates as a whole a system for controlling automotive information display devices 2, in particular of a motor vehicle, e.g. a road vehicle (not shown), and which may comprise the vehicle instrument panel, the car radio, navigator, and air-conditioner displays, or any other on-vehicle device display.

Control system 1 comprises:
- a user interface 3 for setting and adjusting the lighting colours of display devices 2;
- a receiving unit 4 for receiving radio signals from off-vehicle information sources 5;
- an electronic processing unit 6 connected to display devices 2, user interface 3, and receiving unit 4, and configured to control the lighting colour setting and adjustment of display devices 2; and
- a network bus 7 connecting display devices 2 to electronic processing unit 6, to transmit information to each display device 2.

More specifically, user interface 3 is configured to allow the user to select and enter - e.g. by means of a window menu or voice control or manually on a keyboard - the information display colours and the lighting colours of display devices 2 from a range of, say, 256 colours; to enter motoring quantity threshold values as a function of vehicle and/or vehicle engine operating conditions, environment quantity threshold values, and vehicle safety threshold values; and to enter information relative to automatic lighting colour change of each display device 2 in response to a given event, e.g. a sharp or gradual change in lighting colour when the above threshold values are exceeded.

More specifically, receiving unit 4 is configured to receive radio signals from off-vehicle sources, such as:
- en-route motoring information sources, such as speed limit indicators, and devices configured to acquire and indicate hazard or potential hazard situations, such as : narrowing or obstruction of the road; blocked tunnels; dangerous bends; road works; holes in the road; uneven road surface; ice, snow, fog, obstacles, etc.
- remote sources indicating routes and relative traffic conditions, e.g. traffic density, accidents, present or future weather conditions; and
- other vehicles and/or road users equipped with information transmission systems.

Electronic processing unit 6 is configured to receive the signals from user interface 3 and receiving unit 4, and to generate control signals by which to change and/or adjust the lighting colours and information display colours of display devices 2 on the basis of said signals.

More specifically, electronic processing unit 6 is configured to change the information display colours and lighting colours of display devices 2 on the basis of information from off-vehicle information sources.

For example, electronic processing unit 6 may be configured to automatically change the lighting colour of the vehicle speed indicator as a function of the speed limit enforced along the stretch of road travelled by the vehicle, and indicated by a speed limit indicator along the road.

For which purpose, electronic processing unit 6 receives the speed limit indicator signal from receiving unit 4, compares it with the vehicle speed and a predetermined threshold value, if any, and changes the colour of the vehicle speed indicator on the basis of a preset criterion, e.g. when the speed limit indicator value is below the predetermined threshold value, and vehicle speed exceeds the speed limit indicator value. For example, if the user has set a speed limit of 120 km/h, above which electronic processing unit 6 is to automatically change the colour of the speed indicator, e.g. from blue to red or flashing red, and electronic processing unit 6 receives a speed limit indicator signal indicating a speed limit of 50 km/h, e.g. on approaching a town, electronic processing unit 6 changes the colour of the speed indicator, e.g. from blue to red or flashing red, in that the town speed limit obviously has priority over the user speed limit setting.

Similarly, electronic processing unit 6 may be configured to change the lighting colour of one or more instruments on the vehicle instrument panel, e.g. from green to red or flashing red, on receiving a potential-hazard signal from one or more en-route devices configured to acquire and indicate hazard or potential hazard situations, such as : narrowing or obstruction of the road; blocked tunnels; dangerous bends; road works; holes in the road; uneven road surface; ice, fog, etc.; or when the signal contains information relative to the distance of the vehicle from other vehicles or obstacles. In this case, electronic processing unit 6 may, for example, be configured to compare the distance with a predetermined threshold value, and change the lighting colour of the cruising control indicator when the distance between the vehicle and the obstacle or other vehicle is below the predetermined threshold value. Alternatively, if the information relative to the distance between the vehicle and obstacle or other vehicle is received continuously, electronic processing unit 6 may be configured to change the lighting colour of the cruising control indicator gradually, e.g. from green to orange to red, and vice versa, as the predetermined safety distance decreases or increases.

Alternatively, electronic processing unit 6 may be configured to change the lighting colour of one or more instruments on the vehicle instrument panel, e.g. from green to red or flashing red, on receiving, from the vehicle/s in front and/or from on-coming vehicles, a signal containing information relative to a potential hazard situation, such as: sharp braking of one or more vehicles; irregular position of one or more vehicles, caused, for example, by overtaking with an on-coming vehicle in the opposite lane, or in poor visibility, or at blind spots; blind junction ahead; etc.

Alternatively, such information may, for example, be received from vehicles transporting hazardous freight, or from right-of-way vehicles, such as ambulances, fire engines, police vehicles, etc.

Similarly, electronic processing unit 6 may be configured to change the lighting colour of one or more instruments on the vehicle instrument panel, e.g. from green to red or flashing red, on receiving a signal from a so-called vulnerable road user, e.g. pedestrian or cyclist, and indicating the presence of the user in the vicinity of the vehicle. In this case, of course, the vulnerable road user must be equipped with an appropriate signal transmitting device.

Electronic processing unit 6 may also be configured to change the lighting colour of the satellite navigator display on the basis of information from a remote system supplying the satellite navigator with a user-requested route. For example, electronic processing unit 6 may be configured to change the satellite navigator display to red in the event of potential hazards, e.g. numerous bends or sharp gradients, along one or more sections of the route supplied by the remote system. Similarly, electronic processing unit 6 may be configured to change the satellite navigator display to green in the event of one or more non-hazardous, e.g. flat, road sections along the route supplied by the remote system.

Similarly, electronic processing unit 6 may be configured to automatically change the colour of graphically illustrated regions on the satellite navigator map as a function of weather forecast information relative to those regions and supplied by off-vehicle systems. For example, electronic processing unit 6 may be configured to set the colour of the sky shown on the navigator display on the basis of actual cloud conditions, e.g. blue, light grey, grey, or dark grey.

Similarly, electronic processing unit 6 may be configured to automatically change the colour of graphically represented highway sections on the satellite navigator map as a function of information relative to traffic density along the travelled highway section and supplied by off-vehicle systems, such as the TMC (Traffic Message Channel) system.

The advantages of the control system according to the invention are as follows:
- considerable improvement in the visibility of information displayed by on-vehicle display devices;
- considerable improvement in vehicle occupant safety, by immediately indicating any potential hazard situations; and
- improved performance of the display devices themselves, by increasing the amount of information displayed.

Moreover, the control system according to the invention employs at least some of the communication systems already available on the vehicle, such as the on-vehicle communication network of modern vehicles.

Clearly, changes may be made to the control system as described and illustrated herein without, however, departing from the protective scope of the present invention, as defined in the accompanying Claims.

For example, the control system according to the invention may be configured to communicate with other memory-equipped electronic devices, e.g. smart cards, electronic vehicle ignition keys, etc., the memories of which may be loaded, for example, with data relative to possible display device colour combinations and which is transmitted automatically by the electronic devices - e.g. each time the vehicle is turned on - to the control system, which accordingly provides for setting and automatically changing the display colours of the display devices.

System 1 may employ the existing on-vehicle network architecture, e.g. CAN, LIN, TTP, FLEXRAY, etc., connecting and permitting data transmission between all the on-vehicle electronic devices.

## Claims

1. A control system (1) for controlling at least one information display device (2) of a vehicle, said display device (2) being adjustable as regards at least one lighting colour, and said control system comprising a user interface (3) by which a user interacts with said display device (2); receiving means (4) for receiving information from sources off said vehicle; and electronic control means (6) connected to said display device (2), to said user interface (3), and to said receiving means (4) ;
**characterized in that** said electronic control means (6) are configured to control said lighting colour of said display device (2) on the basis of said information from said sources off said vehicle.

2. A control system as claimed in Claim 1, wherein said electronic control means (6) are configured to control said lighting colour of said display device (2) on the basis of information from:
- information sources set up along the route travelled by said vehicle;
- remote information sources supplying routes and information relative to the type and/or traffic conditions of said routes; and
- other vehicles and/or road users along the same route travelled by said vehicle.

3. A control system as claimed in Claim 2, wherein said information sources set up along the route travelled by said vehicle are configured to supply at least one information item indicating: the speed of said vehicle; the distance of said vehicle from another vehicle and/or an obstacle behind and/or in front of said vehicle; and/or a situation representing a hazard or potential hazard to said vehicle.

4. A control system as claimed in Claim 3, wherein said situation representing a hazard or potential hazard to said vehicle and indicated by said information item comprises at least one of the following: narrowing and/or obstruction of the road along said route; blocked tunnels; said vehicle approaching a dangerous bend and/or a junction; road works; holes in said road; uneven and/or slippery road surface; the presence of ice and/or snow and/or oil and/or an obstacle.

5. A control system as claimed in Claim 2, wherein said remote sources are configured to supply at least one information item indicating the type of said route and/or traffic conditions along said route and/or present weather conditions along said route.

6. A control system as claimed in Claims 1 and 2, wherein said electronic control means (6) are configured to control said lighting colour of said display device (2) on the basis of information from and indicating the presence of: vehicles transporting hazardous freight and/or particular right-of-way vehicles, pedestrians and/or cyclists.

7. A control system as claimed in any one of the foregoing Claims, wherein said information display device (2) comprises at least one of the following:
- an instrument panel of said vehicle;
- a car radio display;
- a navigator display;
- an air-conditioner display.
